# EUROPEAN PATENT SPECIFICATION

(11) **EP 3 708 876 B1**
(45) Date of publication and mention of the grant of the patent: **01.06.2022**
(21) Application number: 20156197.4
(22) Date of filing: 07.02.2020
(51) Int. Cl.: F16H 57/04

(54) **VEHICLE LUBRICATION STRUCTURE AND VEHICLE LUBRICATION CONTROL METHOD**
FAHRZEUGSCHMIERSTRUKTUR UND FAHRZEUGSCHMIERSTEUERUNGSVERFAHREN
STRUCTURE DE LUBRIFICATION DE VÉHICULE ET PROCÉDÉ DE COMMANDE DE LUBRIFICATION DE VÉHICULE

(30) Priority: 15.03.2019 JP 2019048787
(43) Date of publication of application: 16.09.2020
(73) Proprietor: TOYOTA JIDOSHA KABUSHIKI KAISHA, Toyota-shi, Aichi-ken 471-8571 (JP)
(72) Inventor: TOKOZAKURA, Daisuke, Aichi-ken,, 471-8571 (JP)
(74) Representative: J A Kemp LLP

(56) References cited:
- EP-A1- 2 600 037
- EP-A2- 0 895 002
- JP-A- 2005 083 491
- JP-A- 2005 117 790
- JP-A- 2009 222 159
- JP-A- 2012 072 876
- JP-B2- 4 096 858

## Description

### BACKGROUND OF THE INVENTION

The present invention relates to a vehicle lubrication structure and a vehicle lubrication control method.

Japanese Unexamined Patent Application Publication No. 2008-279826 (JP 2008-279826 A) discloses a vehicle driving apparatus in which seizure to be caused by deficiency of oil supply can be prevented and a decrease in fuel efficiency can be suppressed by reducing a stirring resistance of oil in a driving force transmission apparatus due to excessive supply of oil. JP 4096858 B2 discloses a cooling system for an electric motor. JP 2005-083491 A discloses an oil catch tank. JP 2009-222159 A discloses an electric motor lubrication system. JP 2012-072876 A discloses a system for cooling lubricating oil in a vehicle. EP 0895002 A2 discloses a device for lubricating a motor vehicle transmission. EP 2600037 A1 discloses a gear unit and lubricant supply system therefor. JP 2005-117790 A discloses a device for lubricating a motor vehicle transmission including a catch tank.

### SUMMARY OF THE INVENTION

In the vehicle driving apparatus disclosed in JP 2008-279826 A, the oil level in a case is reduced by supplying and storing, in a catch tank, oil stored at the bottom of the case. Therefore, if the amount of oil stored in the catch tank increases, oil suppliable to the driving force transmission apparatus or a rotating electrical machine may be insufficient.

The present invention provides a vehicle lubrication structure and a vehicle lubrication control method in which deficiency of oil to be supplied to a driving force transmission apparatus and a rotating electrical machine can be suppressed while reducing a stirring resistance of oil in the driving force transmission apparatus.

A vehicle lubrication structure according to a first aspect of the present invention is provided according to claim 1. Preferred embodiments of the lubrication structure are laid down in the dependent claims 2-5. A vehicle lubrication control structure according to a second aspect of the present invention is provided according to claim 6. Preferred embodiments of the lubrication control method are laid down in dependent claim 7.

In the vehicle lubrication structure according to the first aspect of the present invention, the oil stored in the first reservoir can be supplied to and stored in the second reservoir by operating the electric oil pump. Further, the amount of the oil to be supplied from the second reservoir to the driving force transmission apparatus and the rotating electrical machine can be controlled by controlling the amount of the oil to be supplied from the first reservoir to the second reservoir. Thus, the oil level in the first reservoir can be reduced, and the stirring resistance in the driving force transmission apparatus can be reduced. If oil supply is necessary, deficiency of the oil to be supplied to the driving force transmission apparatus and the rotating electrical machine can be suppressed while suppressing an increase in the oil level in the first reservoir due to return oil, which returns to the first reservoir after being supplied to the driving force transmission apparatus and the rotating electrical machine. Thus, the vehicle lubrication structure and the vehicle lubrication control method according to the first and second aspects of the present invention attain such effects that the deficiency of the oil to be supplied to the driving force transmission apparatus and the rotating electrical machine can be suppressed while reducing the stirring resistance in the driving force transmission apparatus.

In the vehicle lubrication structure according to an embodiment of the present invention, the second reservoir may be provided above a static oil level of the oil stored in the first reservoir.

In the vehicle lubrication structure according to the above described embodiment, an increase in the oil level in the first reservoir can be suppressed and an increase in the stirring resistance can be suppressed because the amount of the oil stored in the second reservoir increases.

The vehicle lubrication structure according to a further embodiment of the present invention may further include a check valve configured to prevent backflow of the oil from the second reservoir to the first reservoir.

In the vehicle lubrication structure according to the above described embodiment, it is possible to suppress an increase in the oil level in the first reservoir due to the backflow of the oil from the second reservoir arranged above the static oil level of the oil stored in the first reservoir. Further, it is possible to reduce the occurrence of a case where lubrication is hindered by the backflow of the oil from the second reservoir to the first reservoir.

The vehicle lubrication structure according to a further embodiment of the present invention may further include a case that houses the first reservoir. The second reservoir may be arranged outside the case.

In the vehicle lubrication structure according to the above described embodiment, the second reservoir can be provided irrespective of the static oil level of the oil stored in the first reservoir.

In the vehicle lubrication structure according to a further embodiment, the second reservoir may be constructed integrally with the oil cooler.

In the vehicle lubrication structure according to the above described embodiment, there is no need to construct the second reservoir as a separate member Thus, the structure can be simplified.

In the vehicle lubrication control method according to the second aspect of the present invention, when the vehicle starts to travel in a state in which the vehicle is completely stopped, the vehicle can start to travel after the second reservoir is filled with the oil by operating the electric oil pump for the constant time. Thus, it is possible to reduce a loss of time to lubricate the driving force transmission apparatus and the rotating electrical machine when the vehicle starts to travel.

The vehicle lubrication control method according to an embodiment of the present invention may further include operating the electric oil pump by the controller for the constant time when an operation stop time of the electric oil pump is equal to or longer than a predetermined time.

In the vehicle lubrication control method according to the above described embodiment, when the vehicle starts to travel in a state in which the vehicle speed is zero and when the operation stop time of the electric oil pump is equal to or longer than the predetermined time, the vehicle can start to travel after the second reservoir is filled with the oil by operating the electric oil pump for the constant time. Thus, it is possible to reduce a loss of time to lubricate the driving force transmission apparatus and the rotating electrical machine when the vehicle starts to travel in the state in which the vehicle speed is zero.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating the schematic configuration of an electric vehicle;
FIG. 2 is a diagram illustrating an example of a vehicle lubrication structure;
FIG. 3 is a sectional view of an oil cooler provided in the electric vehicle;
FIG. 4 is a sectional view of an oil cooler of a comparative example;
FIG. 5 is a diagram illustrating a case where the oil cooler is provided such that at least a part of the oil cooler is positioned below a static oil level in a first reservoir;
FIG. 6 is a diagram illustrating a case where the oil cooler is provided so as to be positioned above the static oil level in the first reservoir;
FIG. 7 is a diagram illustrating a vehicle lubrication structure in a case where a check valve is provided to prevent backflow of oil from a second reservoir to the first reservoir;
FIG. 8 is a flowchart illustrating an example of control over an electric oil pump to be performed when the vehicle starts to travel in a state in which the vehicle is completely stopped;
FIG. 9 is a flowchart illustrating an example of control over the electric oil pump to be performed when the vehicle starts to travel in a state in which the vehicle speed is zero;
FIG. 10 is a diagram illustrating a vehicle lubrication structure in a case where an oil reservoir is provided on an upstream side of the oil cooler, which is not in accordance with the invention;
FIG. 11 is a diagram illustrating a vehicle lubrication structure in a case where the oil reservoir is provided on a downstream side of the oil cooler;
FIG. 12 is a diagram illustrating a vehicle lubrication structure in a case where the electric oil pump is provided on the downstream side of the oil cooler;
FIG. 13 is a diagram illustrating a vehicle lubrication structure in a case where electric oil pumps are provided in branch oil paths for supplying oil to a speed reducing mechanism and a differential, respectively;
FIG. 14 is a sectional view of an oil cooler provided with an oil reservoir below a heat exchanger, which is not in accordance with the invention;
FIG. 15 is a sectional view of an oil cooler provided with an oil reservoir above a heat exchanger;
FIG. 16 is a diagram illustrating a case where an oil path is provided in the vicinity of a motor; and
FIG. 17 is a diagram illustrating an example of a lubrication structure for a hybrid vehicle.

### DETAILED DESCRIPTION OF EMBODIMENTS

A vehicle lubrication structure and a vehicle lubrication control method according to an embodiment of the present invention are described below. This embodiment is not intended to limit the present invention. For example, an electric vehicle is not limited to an electric vehicle including only a rotating electrical machine such as a motor as a traveling drive source. The electric vehicle includes a hybrid vehicle including an engine such as an internal combustion engine and a rotating electrical machine such as a motor as traveling drive sources.

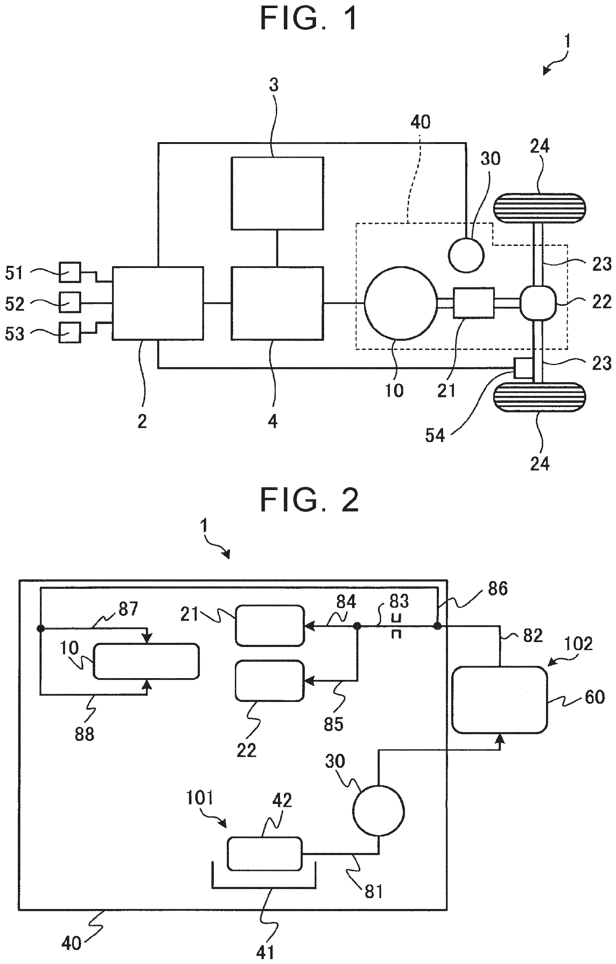

FIG. 1 is a diagram illustrating the overall configuration of an electric vehicle 1. The electric vehicle 1 includes an electronic controller 2, an electric storage device 3, an inverter 4, a rotating electrical machine 10, a speed reducing mechanism 21, a differential 22, a pair of drive shafts 23, a pair of driving wheels 24, an electric oil pump 30, a transaxle case 40, a start switch 51, an accelerator pedal 52, a brake pedal 53, and a vehicle speed sensor 54. In the electric vehicle 1 according to the embodiment, the rotating electrical machine 10, the speed reducing mechanism 21, the differential 22, and the electric oil pump 30 are arranged in the transaxle case 40 that is a common housing.

The electronic controller 2 determines a target drive torque of the rotating electrical machine 10 based on, for example, conditions of the accelerator pedal 52 and the brake pedal 53 operated by a driver and a vehicle speed acquired by the vehicle speed sensor 54. The electronic controller 2 commands the inverter 4 based on the determined target drive torque. The commanded inverter 4 converts direct-current power of the electric storage device 3 into alternating-current power based on the target drive torque, and transmits the alternating-current power to the rotating electrical machine 10. Examples of the electric storage device 3 include a secondary battery such as a nickel-metal hydride battery or a lithium ion battery, and a capacitor. An output torque of the rotating electrical machine 10 is transmitted to the pair of driving wheels 24 via the speed reducing mechanism 21, the differential 22, and the pair of drive shafts 23 to achieve the target drive torque. The speed reducing mechanism 21 and the differential 22 are constituted by a plurality of gears to constitute a driving force transmission apparatus. In the electric vehicle 1 according to the embodiment, the traveling drive source is the rotating electrical machine 10 only, and therefore the output torque of the rotating electrical machine 10 corresponds to a drive torque of the vehicle.

The start switch 51 is an input device to be used by the driver to perform a "READY ON" operation or a "READY OFF" operation. By operating the start switch 51, a signal indicating that the start switch 51 is operated is transmitted to the electronic controller 2. The "READY ON" operation is an operation for bringing the electric vehicle 1 into a "READY ON" state (travelable state) by starting a vehicle system (device for causing the electric vehicle 1 to travel). The "READY OFF" operation is an operation for bringing the electric vehicle 1 into a "READY OFF" state (untravelable state) by stopping the vehicle system. When the signal indicating that the start switch 51 is operated is received in the "READY OFF" state, the electronic controller 2 brings the electric vehicle 1 into the "READY ON" state. When the signal indicating that the start switch 51 is operated is received in the "READY ON" state, the electronic controller 2 brings the electric vehicle 1 into the "READY OFF" state.

FIG. 2 is a diagram illustrating an example of a lubrication structure for the electric vehicle 1. In the lubrication structure for the electric vehicle 1, an oil pan 41, a strainer 42, the rotating electrical machine 10, the speed reducing mechanism 21, the differential 22, and the electric oil pump 30 are provided inside the transaxle case 40. Further, an oil cooler 60 is provided outside the transaxle case 40 to cool oil.

The oil pan 41 together with the bottom of the transaxle case 40 constitutes a first reservoir 101 configured to store oil. Oil supply from the oil pan 41 to the oil cooler 60 via the strainer 42 is performed through a first oil path constituted by a pipe 81. The electric oil pump 30 is provided midway along the pipe 81 that constitutes the first oil path. In the electric vehicle 1 according to the embodiment, the oil cooler 60 is arranged in an oil path which supplies oil to the rotating electrical machine 10. Oil supply from the oil cooler 60 to the rotating electrical machine 10, the speed reducing mechanism 21, and the differential 22 is performed through a second oil path constituted by a plurality of pipes such as a pipe 82 to a pipe 88 connecting the oil cooler 60 to the rotating electrical machine 10, the speed reducing mechanism 21, and the differential 22.

The second oil path is constituted by the pipe 82 coupled to the oil cooler 60, the pipes 83 and 86 branching from the pipe 82, the pipes 84 and 85 branching from the pipe 83, and the pipes 87 and 88 branching from the pipe 86. The pipe 84 constitutes a branch oil path for supplying oil to the speed reducing mechanism 21. The pipe 85 constitutes a branch oil path for supplying oil to the differential 22. The pipes 87 and 88 constitute a branch oil path for supplying oil to the rotating electrical machine 10.

By operating the electric oil pump 30, the oil stored in the first reservoir 101 is forcibly supplied to the rotating electrical machine 10, the speed reducing mechanism 21, and the differential 22. The amount of oil to be supplied to the rotating electrical machine 10, the speed reducing mechanism 21, and the differential 22 is adjustable by changing power of the electric oil pump 30.

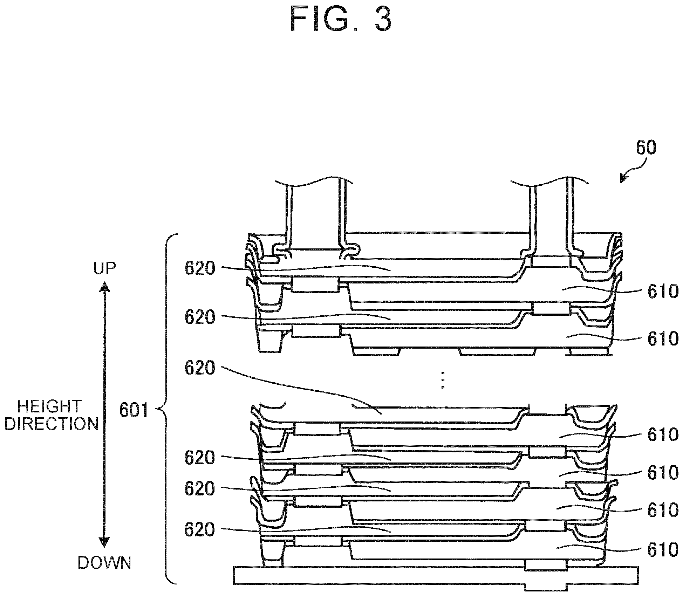

FIG. 3 is a sectional view of the oil cooler 60 provided in the electric vehicle 1 according to the embodiment. As illustrated in FIG. 3, the oil cooler 60 provided in the electric vehicle 1 according to the embodiment includes a heat exchanger 601 in which a plurality of oil channels 610 and a plurality of coolant channels 620 are alternately stacked in a height direction. In the heat exchanger 601, oil flowing through the oil channel 610 exchanges heat with a coolant flowing through the coolant channel 620, thereby cooling the oil.

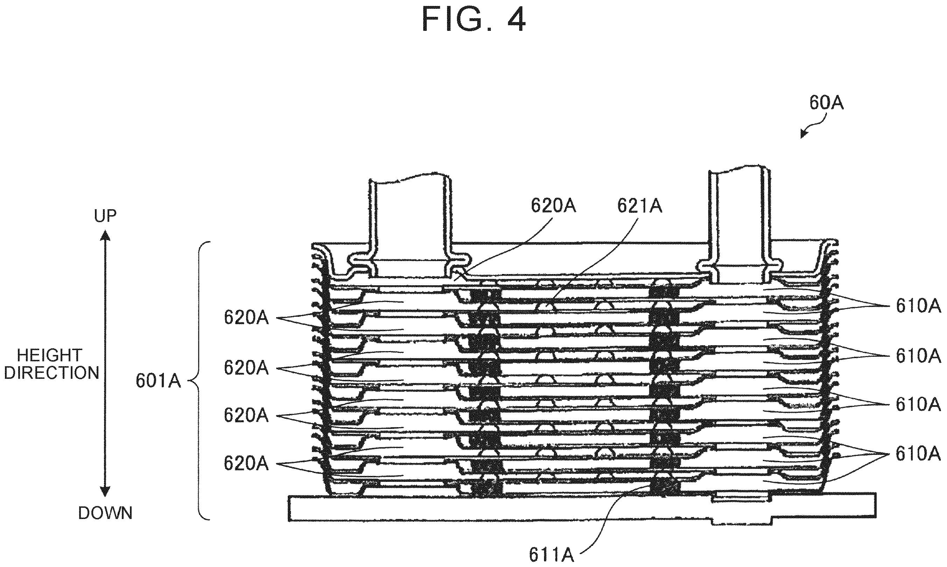

FIG. 4 is a sectional view of an oil cooler 60A of a comparative example. As illustrated in FIG. 4, the oil cooler 60A of the comparative example includes a heat exchanger 601Ain which a plurality of oil channels 610Aand a plurality of coolant channels 620A are alternately stacked in a height direction. In the oil cooler 60A of the comparative example, a plurality of fins 611A are provided in the oil channels 610A, and a plurality of embossments 621A are provided in the coolant channels 620A.

The height, width, and length of the oil channel 610 of the oil cooler 60 provided in the electric vehicle 1 according to the embodiment are larger than the height, width, and length of the oil channel 610A of the oil cooler 60A of the comparative example. That is, the capacity of the oil channel 610 is larger than the capacity of the oil channel 610A. No embossment is provided in the coolant channel 620, and therefore the capacity of the coolant channel 620 is larger, by an amount corresponding to embossments, than the coolant channel 620A provided with the embossments 621A.

Thus, in the oil cooler 60 provided in the electric vehicle 1 according to the embodiment, the heat exchange performance is equal to that of the oil cooler 60A of the comparative example, and a pressure loss in the oil channel 610 is greatly smaller than that of the oil cooler 60A. A large amount of oil can be stored in the oil cooler 60, and therefore the oil cooler 60 of the electric vehicle 1 according to the embodiment functions as a second reservoir 102 configured to store oil separately from the first reservoir 101. By constructing the second reservoir 102 integrally with the oil cooler 60, there is no need to construct the second reservoir 102 as a separate member. Thus, the structure can be simplified.

The amount of oil that can be stored in the oil cooler 60 provided in the electric vehicle 1 according to the embodiment in FIG. 3 is 1000 [ml] to 2000 [ml]. The amount of oil that can be stored in the oil cooler 60A of the comparative example in FIG. 4 is 300 [ml] to 600 [ml].

In the lubrication structure for the electric vehicle 1 according to the embodiment, the oil stored in the first reservoir 101 can be supplied to and stored in the second reservoir 102 by operating the electric oil pump 30. Further, the amount of oil to be supplied from the second reservoir 102 to the rotating electrical machine 10, the speed reducing mechanism 21, and the differential 22 can be controlled by controlling the amount of oil to be supplied from the first reservoir 101 to the second reservoir 102. Thus, the oil level in the first reservoir 101 can be reduced, and the stirring resistance in each of the speed reducing mechanism 21 and the differential 22 can be reduced. If oil supply is necessary, deficiency of oil to be supplied to the rotating electrical machine 10, the speed reducing mechanism 21, and the differential 22 can be suppressed while suppressing an increase in the oil level in the first reservoir 101 due to return oil. The return oil is oil that returns to the first reservoir 101 after being supplied to the rotating electrical machine 10, the speed reducing mechanism 21, and the differential 22. Thus, in the lubrication structure for the electric vehicle 1 according to the embodiment, the deficiency of oil to be supplied to the rotating electrical machine 10, the speed reducing mechanism 21, and the differential 22 can be suppressed while reducing the stirring resistance in each of the speed reducing mechanism 21 and the differential 22.

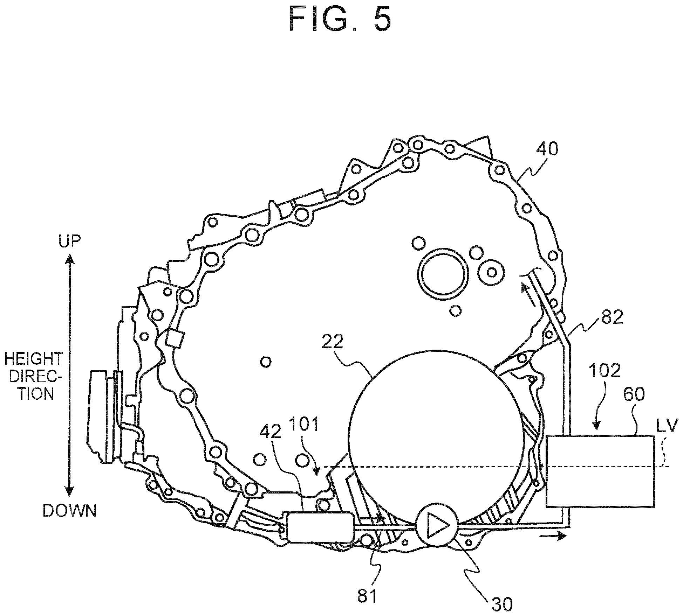

In the electric vehicle 1 according to the embodiment, as illustrated in FIG. 5, the oil cooler 60 is provided such that at least a part of the oil cooler 60 is positioned below a static oil level LV in the first reservoir 101 constituted by the oil pan 41 (not illustrated). The static oil level LV refers to an oil level in a state in which the oil cooler 60 is not filled with oil. Therefore, the oil level of the oil stored in the oil cooler 60 can be made substantially equal to the static oil level LV even if the operation of the electric oil pump 30 is stopped due to, for example, a stop of the electric vehicle 1. Thus, it is possible to prevent the occurrence of a case where the oil in the oil cooler 60 runs short due to backflow of the oil from the oil cooler 60 to the oil pan 41. When oil is supplied from the oil pan 41 to the oil cooler 60 by operating the electric oil pump 30 through the start of traveling of the electric vehicle 1, for example, the oil cooler 60 can quickly be filled with oil because oil is prestored in the oil cooler 60. Thus, it is possible to reduce a loss of time to lubricate the rotating electrical machine 10, the speed reducing mechanism 21, and the differential 22.

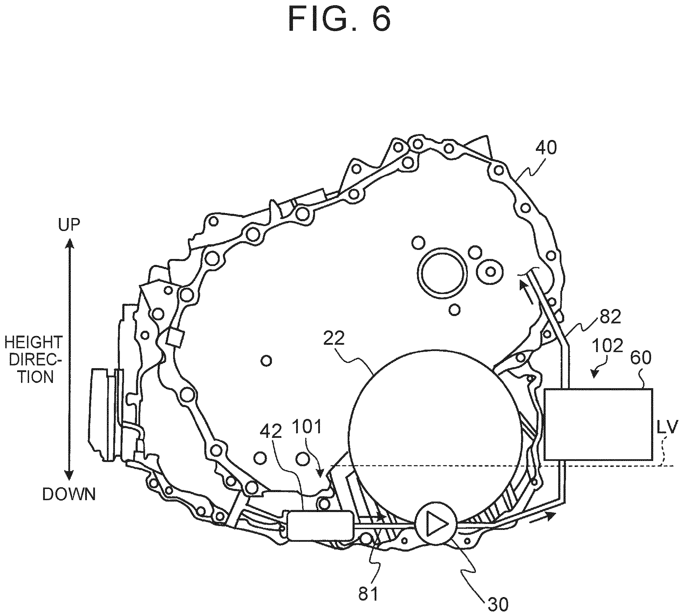

In the electric vehicle 1 according to the embodiment, as illustrated in FIG. 6, the oil cooler 60 may be provided such that the oil cooler 60 is positioned above the static oil level LV of the oil stored in the oil pan 41 (not illustrated). Therefore, an increase in the oil level of the oil stored in the oil pan 41 can be suppressed by increasing the amount of oil stored in the oil cooler 60 increases. Thus, it is possible to suppress an increase in the stirring resistance when the oil stored in the oil pan 41 is stirred by the differential 22 or the like.

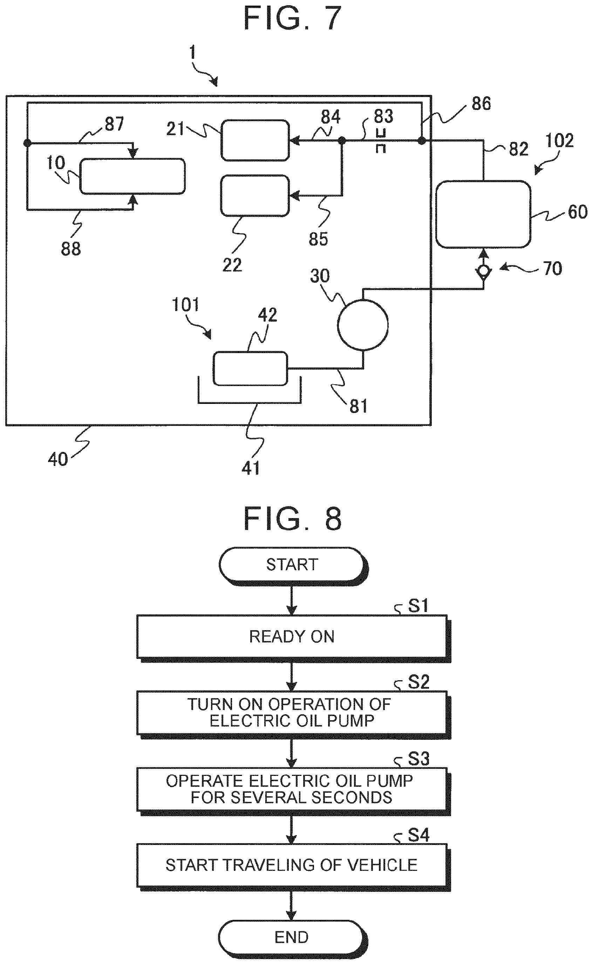

If the oil cooler 60 is provided so as to be positioned above the static oil level LV in the oil pan 41, it is preferable as illustrated in FIG. 7 that a check valve 70 configured to prevent backflow of oil from the oil cooler 60 to the oil pan 41 be provided midway along the pipe 81 that constitutes the first oil path. Since the check valve 70 prevents the backflow of oil from the oil cooler 60 to the oil pan 41, it is possible to suppress an increase in the oil level of the oil stored in the oil pan 41 due to the backflow of oil from the oil cooler 60. Thus, it is possible to suppress the increase in the stirring resistance when the oil stored in the oil pan 41 is stirred by the differential 22 or the like. Further, it is possible to reduce the occurrence of a case where lubrication of the rotating electrical machine 10, the speed reducing mechanism 21, and the differential 22 is hindered by the backflow of oil from the oil cooler 60 to the oil pan 41.

FIG. 8 is a flowchart illustrating an example of control over the electric oil pump 30 to be performed when the vehicle starts to travel in a state in which the vehicle is completely stopped.

First, the electronic controller 2 brings the electric vehicle 1 into the "READY ON" state when a signal indicating that the start switch 51 is operated by the driver (signal indicating a request to start the vehicle system) is received in the "READY OFF" state (Step S1). Next, the electronic controller 2 starts to operate the electric oil pump 30 (turns ON the operation of the electric oil pump 30) (Step S2), and operates the electric oil pump 30 for several seconds as a constant time (Step S3). Then, the electronic controller 2 starts traveling of the electric vehicle 1 in response to an operation of the accelerator pedal 52 by the driver or the like (Step S4).

When the vehicle starts to travel in the state in which the vehicle is completely stopped, the electric vehicle 1 can start to travel after the oil cooler 60 is filled with oil by operating the electric oil pump 30 for several seconds as the constant time. Thus, it is possible to reduce a loss of time to lubricate the rotating electrical machine 10, the speed reducing mechanism 21, and the differential 22 when the vehicle starts to travel.

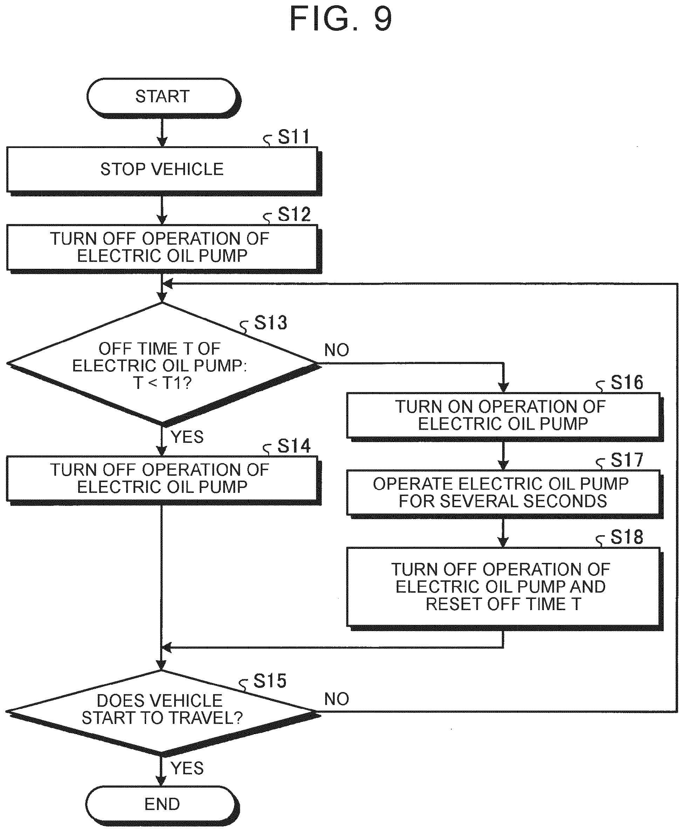

FIG. 9 is a flowchart illustrating an example of control over the electric oil pump 30 to be performed when the vehicle starts to travel in a state in which the vehicle speed is zero.

First, the electronic controller 2 determines that the electric vehicle 1 is stopped when a signal indicating that the vehicle speed is zero is received from the vehicle speed sensor 54 (Step 11). Next, the electronic controller 2 stops the operation of the electric oil pump 30 (turns OFF the operation of the electric oil pump 30) (Step S12). Next, the electronic controller 2 determines whether an OFF time T, which is an operation stop time of the electric oil pump 30, is shorter than a predetermined time T1 (Step S13). When determination is made that the OFF time T is shorter than the predetermined time T1 (Yes in Step S13), the electronic controller 2 keeps the operation of the electric oil pump in the OFF state (Step S14), and determines whether the vehicle starts to travel (Step S15).

When determination is made that the vehicle starts to travel in response to an operation in which the driver stops depressing the brake pedal 53 or depresses the accelerator pedal 52 (Yes in Step S15), the electronic controller 2 terminates the control over the electric oil pump 30, which is performed when the vehicle starts to travel in the state in which the vehicle speed is zero. When determination is made that the vehicle does not start to travel in response to an operation in which the driver keeps depressing the brake pedal 53 (No in Step S15), the electronic controller 2 returns to the processing of Step S13.

When determination is made in the processing of Step S13 that the OFF time T is equal to or longer than the predetermined time T1 (No in Step S13), the electronic controller 2 starts to operate the electric oil pump 30 (turns ON the operation of the electric oil pump 30) (Step S16), and operates the electric oil pump 30 for several seconds as the constant time (Step S17). Next, the electronic controller 2 stops the operation of the electric oil pump 30 (turns OFF the operation of the electric oil pump 30), and resets the OFF time T (Step S18).

Next, the electronic controller 2 determines whether the vehicle starts to travel (Step S15). When determination is made that the vehicle starts to travel in response to an operation in which the driver stops depressing the brake pedal 53 or depresses the accelerator pedal 52 (Yes in Step S15), the electronic controller 2 terminates the control over the electric oil pump 30, which is performed when the vehicle starts to travel in the state in which the vehicle speed is zero. When determination is made that the vehicle does not start to travel in response to an operation in which the driver keeps depressing the brake pedal 53 (No in Step S15), the electronic controller 2 returns to the processing of Step S13.

When the vehicle starts to travel in the state in which the vehicle speed is zero and when the OFF time T of the electric oil pump 30 is equal to or longer than the predetermined time T1, the electric vehicle 1 can start to travel after the oil cooler 60 is filled with oil by operating the electric oil pump 30 for several seconds as the constant time. Thus, it is possible to reduce a loss of time to lubricate the rotating electrical machine 10, the speed reducing mechanism 21, and the differential 22 when the vehicle starts to travel in the state in which the vehicle speed is zero.

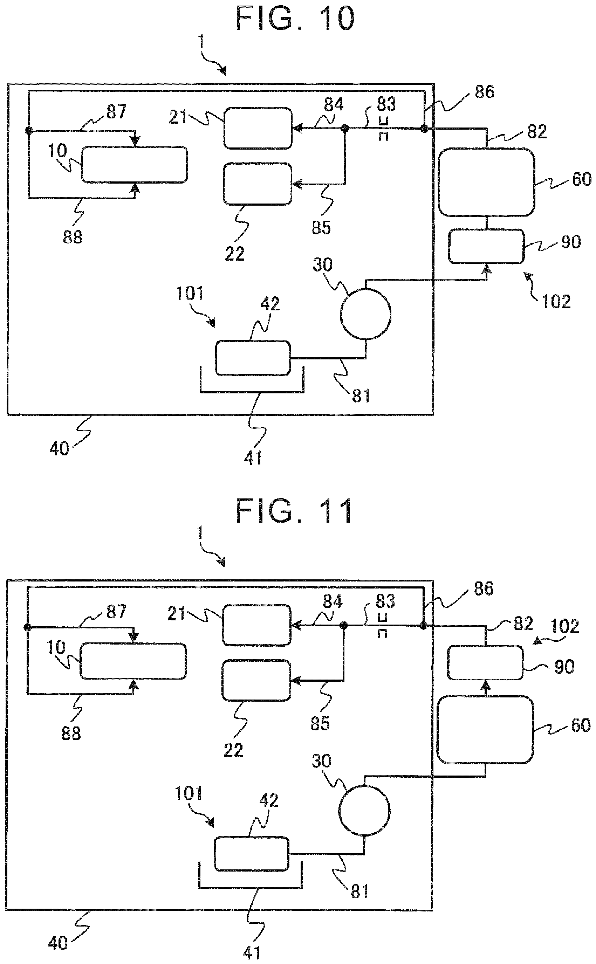

FIG. 10 is a diagram illustrating a lubrication structure for the electric vehicle 1 in a case where an oil reservoir 90 is provided on an upstream side of the oil cooler 60. FIG. 11 is a diagram illustrating a vehicle lubrication structure in a case where the oil reservoir 90 is provided on a downstream side of the oil cooler 60. FIG. 10 is not an example in accordance with the invention. In the electric vehicle 1, as illustrated in FIG. 10, the oil reservoir 90 that constitutes the second reservoir 102 may be provided as a separate member from the oil cooler 60 on the upstream side of the oil cooler 60 and midway along the pipe 81 that constitutes the first oil path. As illustrated in FIG. 11, the oil reservoir 90 that constitutes the second reservoir 102 may be provided as a separate member from the oil cooler 60 on the downstream side of the oil cooler 60 and midway along the pipe 82 that constitutes the second oil path. By providing the oil reservoir 90 that constitutes the second reservoir 102 outside the oil cooler 60 as a separate member from the oil cooler 60, the degree of freedom increases in terms of the capacity of the second reservoir 102. More oil is stored in the oil reservoir 90 that constitutes the second reservoir 102 than the case where oil is stored by using only the heat exchanger 601 of the oil cooler 60 as the second reservoir 102. Thus, the static oil level LV of the oil stored in the oil pan 41 can be reduced. Accordingly, the stirring resistance of oil due to the differential 22 or the like can be reduced, and the deficiency of oil to be supplied to the rotating electrical machine 10, the speed reducing mechanism 21, and the differential 22 can be suppressed.

In the electric vehicle 1 according to the embodiment, one or more electric oil pumps 30 may be provided in the second oil path on a downstream side of the second reservoir 102 instead of the first oil path connecting the first reservoir 101 to the second reservoir 102.

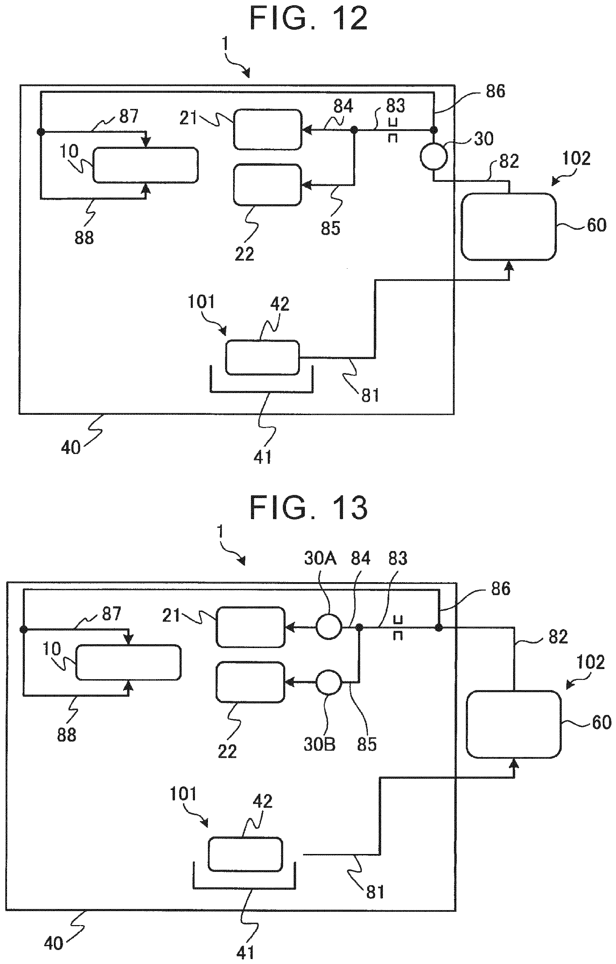

FIG. 12 is a diagram illustrating a lubrication structure for the electric vehicle 1 in a case where the electric oil pump 30 is provided on the downstream side of the oil cooler 60. In the electric vehicle 1, as illustrated in FIG. 12, the electric oil pump 30 may be provided on the downstream side of the oil cooler 60 and midway along the pipe 82 that constitutes the second oil path.

FIG. 13 is a diagram illustrating a lubrication structure for the electric vehicle 1 in a case where electric oil pumps 30A and 30B are provided in the branch oil paths for supplying oil to the speed reducing mechanism 21 and the differential 22, respectively. In the electric vehicle 1, as illustrated in FIG. 13, the electric oil pumps 30A and 30B may be provided on the downstream side of the oil cooler 60 and midway along the pipes 84 and 85 that constitute the second oil path and also constitute the branch oil paths for supplying oil to the speed reducing mechanism 21 and the differential 22, respectively. By providing the electric oil pumps 30A and 30B midway along the pipes 84 and 85 for supplying oil to the speed reducing mechanism 21 and the differential 22, respectively, power of the electric oil pump 30A and power of the electric oil pump 30B are changed such that the amounts of oil to be supplied to the speed reducing mechanism 21 and the differential 22 can be adjusted. Thus, appropriate amounts of oil can be supplied to the speed reducing mechanism 21 and the differential 22, and a drag loss of oil in the speed reducing mechanism 21 and the differential 22 can further be reduced.

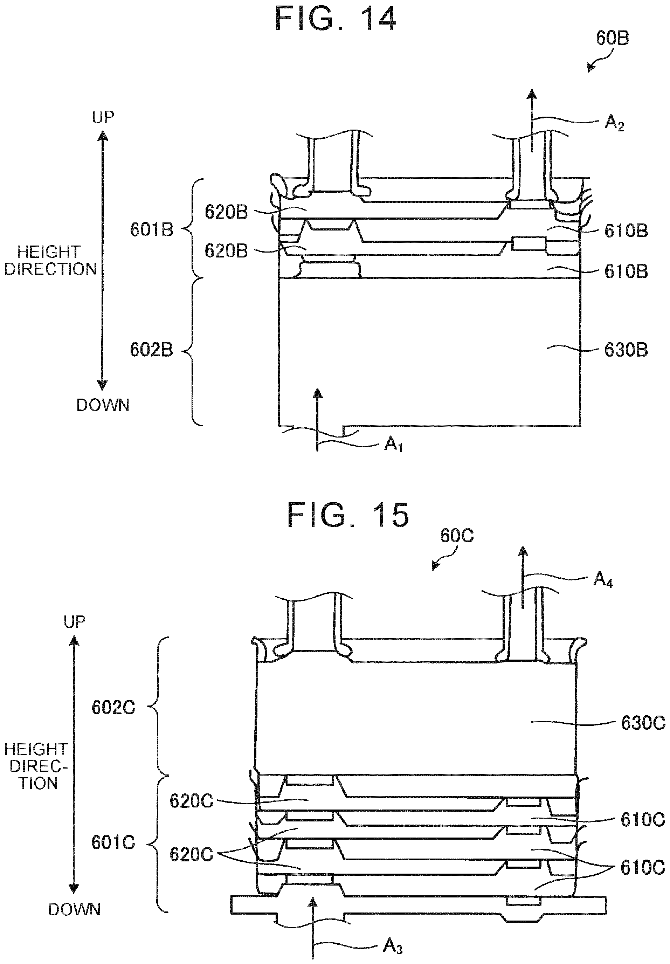

FIG. 14 is a sectional view of an oil cooler 60B provided with an oil reservoir 602B below a heat exchanger 601B. In an electric vehicle 1 which is not in accordance with the invention, the oil cooler 60B including the heat exchanger 601B and the oil reservoir 602B as illustrated in FIG. 14 may be used as the second reservoir 102 in place of the oil cooler 60 having the internal structure illustrated in FIG. 3.

The heat exchanger 601B is configured such that a plurality of oil channels 610B and a plurality of coolant channels 620B are alternately stacked in a height direction. The oil reservoir 602B having a reservoir space 630B configure to store oil is provided below the heat exchanger 601B. The reservoir space 630B communicates with a lowermost oil channel 610B of the heat exchanger 601B.

As indicated by an arrow A₁ in FIG. 14, oil sent from the oil pan 41 to the oil cooler 60B by the electric oil pump 30 is supplied into the reservoir space 630B from the bottom of the oil reservoir 602B. After the reservoir space 630B is filled with the oil, the oil is supplied from the reservoir space 630B to the oil channel 610B of the heat exchanger 601B. Through the plurality of oil channels 610B, the oil is discharged from the top of the heat exchanger 601B as indicated by an arrow A₂ in FIG. 14.

By providing the oil reservoir 602B having the dedicated reservoir space 630B configured to store oil in the oil cooler 60B as the oil cooler 60B illustrated in FIG. 14, more oil can be stored in the oil cooler 60B than the case where oil is stored only in the oil channels 610 of the heat exchanger 601 of the oil cooler 60. Thus, as compared to the use of the oil cooler 60, the static oil level LV of the oil stored in the oil pan 41 can further be reduced with the same amount of oil as that in the case where the oil cooler 60 is used. Accordingly, the stirring resistance of oil due to the differential 22 or the like can be reduced, and the deficiency of oil to be supplied to the rotating electrical machine 10, the speed reducing mechanism 21, and the differential 22 can be suppressed.

FIG. 15 is a sectional view of an oil cooler 60C provided with an oil reservoir 602C above a heat exchanger 601C. In the electric vehicle 1 according to the embodiment, the oil cooler 60C including the heat exchanger 601C and the oil reservoir 602C as illustrated in FIG. 15 may be used as the second reservoir 102 in place of the oil cooler 60 having the internal structure illustrated in FIG. 3.

The heat exchanger 601C is configured such that a plurality of oil channels 610C and a plurality of coolant channels 620C are alternately stacked in a height direction. The oil reservoir 602C having a reservoir space 630C configured to store oil is provided above the heat exchanger 601C. The reservoir space 630C communicates with an uppermost oil channel 610C of the heat exchanger 601C.

As indicated by an arrow A₃ in FIG. 15, oil sent from the oil pan 41 to the oil cooler 60C by the electric oil pump 30 is supplied to the oil channel 610C from the bottom of the heat exchanger 601C. Through the plurality of oil channels 610C, the oil is supplied to the reservoir space 630C of the oil reservoir 602C, and is stored in the reservoir space 630C. After the reservoir space 630C is filled with the oil, the oil is discharged from the top of the oil reservoir 602C as indicated by an arrow A₄ in FIG. 15.

By providing the oil reservoir 602C having the dedicated reservoir space 630C configured to store oil in the oil cooler 60C as the oil cooler 60C illustrated in FIG. 15, more oil can be stored in the oil cooler 60C than the case where oil is stored only in the oil channels 610 of the heat exchanger 601 of the oil cooler 60. Thus, as compared to the use of the oil cooler 60, the static oil level LV of the oil stored in the oil pan 41 can further be reduced with the same amount of oil as that in the case where the oil cooler 60 is used. Accordingly, the stirring resistance of oil due to the differential 22 or the like can be reduced, and the deficiency of oil to be supplied to the rotating electrical machine 10, the speed reducing mechanism 21, and the differential 22 can be suppressed.

Since the oil reservoir 602C is provided above the heat exchanger 601C, the oil stored in the oil reservoir 602C is more unlikely to flow out of the oil cooler 60C through the plurality of oil channels 610C of the heat exchanger 601C as compared to a case where the oil reservoir 602C is provided below the heat exchanger 601C. Therefore, the amount of oil in the oil reservoir 602C is unlikely to decrease in a state in which the electric oil pump 30 is not operated. Thus, it is possible to reduce a loss of time to lubricate the rotating electrical machine 10, the speed reducing mechanism 21, and the differential 22 when the electric oil pump 30 is operated, for example, at the start of traveling of the vehicle.

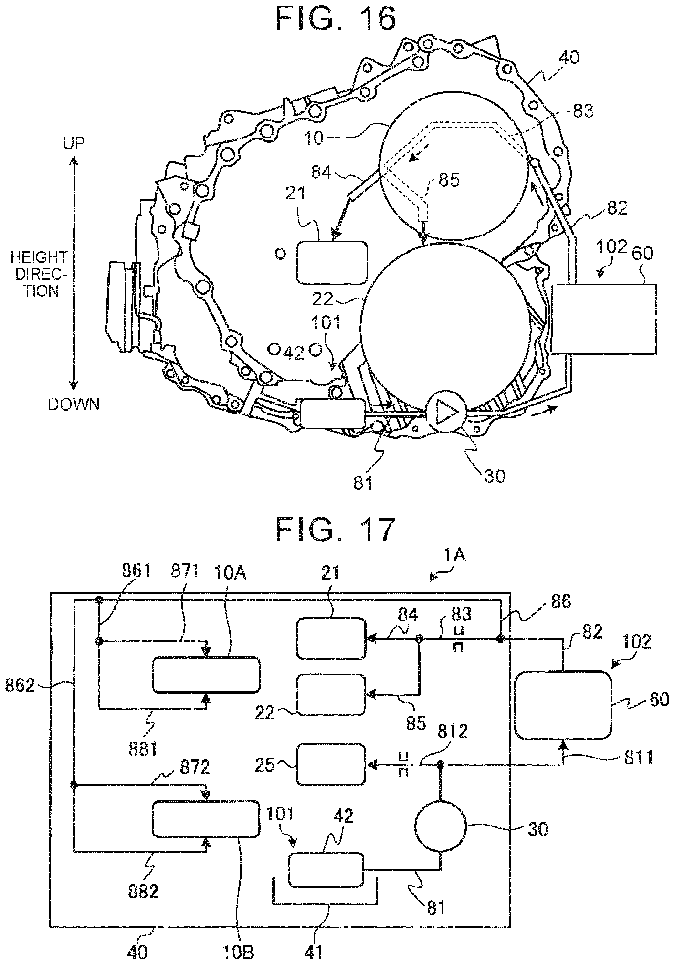

FIG. 16 is a diagram illustrating a case where the oil path is provided in the vicinity of the rotating electrical machine 10. Since the temperature of oil passing through the oil cooler 60 decreases, the temperature of oil supplied to the speed reducing mechanism 21 and the differential 22 decreases as well. As the temperature of oil decreases, the viscosity of oil increases. There is a possibility that the drag loss of oil in the speed reducing mechanism 21 and the differential 22 is exacerbated.

As illustrated in FIG. 16, the pipes 82, 83, 84, and 85 that constitute the second oil path for supplying oil from the oil cooler 60 to the speed reducing mechanism 21 and the differential 22 are arranged in the vicinity of the rotating electrical machine 10. Oil flowing through the pipes 82, 83, 84, and 85 arranged in the vicinity of the rotating electrical machine 10 is warmed by heat generated by driving the rotating electrical machine 10. Therefore, the viscosity of the oil flowing through the pipes 82, 83, 84, and 85 is lower than the viscosity of oil cooled by the oil cooler 60. Thus, it is possible to suppress the exacerbation of the drag loss of oil in the speed reducing mechanism 21 and the differential 22. The pipes 82, 83, 84, and 85 that constitute the second oil path for supplying oil from the oil cooler 60 to the speed reducing mechanism 21 and the differential 22 may be arranged at positions where the pipes 82, 83, 84, and 85 are brought into contact with oil flowed out from the rotating electrical machine 10. Since the oil supplied to the rotating electrical machine 10 and warmed by heat of the rotating electrical machine 10 is brought into contact with the pipes 82, 83, 84, and 85, the oil flowing through the pipes 82, 83, 84, and 85 can be warmed. Thus, effects similar to those described above can be attained.

In this embodiment, description is given of the case where the present invention is applied to the lubrication structure for the electric vehicle 1 in which the traveling drive source is only the rotating electrical machine 10. The present invention may also be applied to, for example, a lubrication structure for a hybrid vehicle including an engine and a rotating electrical machine as traveling drive sources.

FIG. 17 is a diagram illustrating an example of a lubrication structure for a hybrid vehicle 1A. In the lubrication structure for the hybrid vehicle 1A illustrated in FIG. 17, the oil pan 41, the strainer 42, rotating electrical machines 10A and 10B, the speed reducing mechanism 21, the differential 22, the electric oil pump 30, and a planetary gear mechanism 25 are provided inside the transaxle case 40, and the oil cooler 60 and an engine that is an internal combustion engine (not illustrated) are provided outside the transaxle case 40. The oil pan 41 and the strainer 42 constitute the first reservoir 101. The speed reducing mechanism 21 and the differential 22 constitute the driving force transmission apparatus. In the hybrid vehicle 1A illustrated in FIG. 17, the engine and the rotating electrical machine 10B are used as traveling drive sources.

Oil supply from the oil pan 41 to the oil cooler 60 via the strainer 42 is performed through a first oil path constituted by pipes 81 and 811. The electric oil pump 30 is provided midway along the pipe 81 that constitutes the first oil path. Oil supply from the oil cooler 60 to the rotating electrical machines 10A and 10B, the speed reducing mechanism 21, and the differential 22 is performed through a second oil path constituted by a plurality of pipes such as the pipe 82 to the pipe 88. Oil supply from the oil pan 41 to the planetary gear mechanism 25 via the strainer 42 is performed through pipes 81 and 812.

The pipes 811 and 812 branch from the pipe 81 on a downstream side of the electric oil pump 30 in the pipe 81 to constitute branch oil paths for supplying oil to the oil cooler 60 and the planetary gear mechanism 25, respectively. The planetary gear mechanism 25 may be arranged on a downstream side or an upstream side of the oil cooler 60.

The second oil path is constituted by the pipe 82 coupled to the oil cooler 60, the pipes 83 and 86 branching from the pipe 82, the pipes 84 and 85 branching from the pipe 83, pipes 861 and 862 branching from the pipe 86, pipes 871 and 881 branching from the pipe 861, and pipes 872 and 882 branching from the pipe 862. The pipe 84 constitutes a branch oil path for supplying oil to the speed reducing mechanism 21. The pipe 85 constitutes a branch oil path for supplying oil to the differential 22. The pipes 871 and 881 constitute a branch oil path for supplying oil to the rotating electrical machine 10A. The pipe 872 and 882 constitute a branch oil path for supplying oil to the rotating electrical machine 10B.

In the lubrication structure for the hybrid vehicle 1A illustrated in FIG. 17, oil stored in the first reservoir 101 is supplied to the rotating electrical machines 10A and 10B, the speed reducing mechanism 21, the differential 22, and the planetary gear mechanism 25 by operating the electric oil pump 30.

Also in the lubrication structure for the hybrid vehicle 1A illustrated in FIG. 17, deficiency of oil to be supplied to the rotating electrical machines 10A and 10B, the speed reducing mechanism 21, the differential 22, and the planetary gear mechanism 25 can be suppressed while reducing the stirring resistance in each of the speed reducing mechanism 21 and the differential 22 by applying various types of configuration and control similar to those of the lubrication structure for the electric vehicle 1 described above.

## Claims

1. A vehicle lubrication structure for a vehicle comprising:
a rotating electrical machine (10); and
a driving force transmission apparatus (21, 22);
the vehicle lubrication structure comprising:
a first reservoir (101) configured to store oil;
an oil cooler (60) configured to cool the oil;
a second reservoir (102) configured to store the oil and having a capacity smaller than a capacity of the first reservoir (101);
a first oil path (81) connecting the first reservoir (101) to the oil cooler (60);
a second oil path (82, 83, 84, 85, 86, 87, 88) connecting the oil cooler (60) to the driving force transmission apparatus (21, 22) and the rotating electrical machine (10), the second oil path (82, 83, 84, 85, 86, 87, 88) including branch oil paths for supplying the oil to the driving force transmission apparatus (21, 22) and the rotating electrical machine (10), respectively, pipes (82, 83, 84, 85) provided in the second oil path (82, 83, 84, 85, 86, 87, 88) and which supply oil from the oil cooler (60) to the driving force transmission apparatus (21, 22) being arranged in the vicinity of the rotating electrical machine (10), such that oil flowing in the pipes (82, 83, 84, 85) is warmed by heat generated by the rotating electrical machine (10); and
an electric oil pump (30) configured to supply the oil stored in the first reservoir (101) to the driving force transmission apparatus (21, 22) and the rotating electrical machine (10), the electric oil pump (30) being provided in the first oil path (81) or the second oil path (82, 83, 84, 85, 86, 87, 88),
the second reservoir (102) being provided downstream of the oil cooler (60) in the second oil path (82, 83, 84, 85, 86, 87, 88).

2. The vehicle lubrication structure according to claim 1, wherein the second reservoir (102) is provided above a static oil level of the oil stored in the first reservoir (101).

3. The vehicle lubrication structure according to claim 2, further comprising a check valve (70) configured to prevent backflow of the oil from the second reservoir (102) to the first reservoir (101).

4. The vehicle lubrication structure according to any one of claims 1 to 3, further comprising a case (40) that houses the first reservoir (101), wherein the second reservoir (102) is arranged outside the case (40).

5. The vehicle lubrication structure according to any one of claims 1 to 4, wherein the second reservoir (102) is constructed integrally with the oil cooler (60).

6. A vehicle lubrication control method for a vehicle,
the vehicle including a rotating electrical machine (10), a driving force transmission apparatus (21, 22), a first reservoir (101), an oil cooler (60), a second reservoir (102), a first oil path (81), a second oil path (82, 83, 84, 85, 86, 87, 88), an electric oil pump (30), and a controller (2),
the first reservoir (101) being configured to store oil,
the oil cooler (60) being configured to cool the oil,
the second reservoir (102) being configured to store the oil and having a capacity smaller than a capacity of the first reservoir (101),
the first oil path (81) connecting the first reservoir (101) to the oil cooler (60),
the second oil path (82, 83, 84, 85, 86, 87, 88) connecting the oil cooler (60) to the driving force transmission apparatus (21, 22) and the rotating electrical machine (10),
the second oil path (82, 83, 84, 85, 86, 87, 88) including branch oil paths for supplying the oil to the driving force transmission apparatus (21, 22) and the rotating electrical machine (10), respectively, pipes (82, 83, 84, 85) provided in the second oil path (82, 83, 84, 85, 86, 87, 88) and which supply oil from the oil cooler (60) to the driving force transmission apparatus (21, 22) being arranged in the vicinity of the rotating electrical machine (10), such that oil flowing in the pipes (82, 83, 84, 85) is warmed by heat generated by the rotating electrical machine (10),
the electric oil pump (30) being provided in the first oil path (81) or the second oil path (82, 83, 84, 85, 86, 87, 88),
the electric oil pump (30) being configured to supply the oil stored in the first reservoir (101) to the driving force transmission apparatus (21, 22) and the rotating electrical machine (10),
the second reservoir (102) being provided downstream of the oil cooler (60) in the second oil path (82, 83, 84, 85, 86, 87, 88),
the controller (2) being configured to control the electric oil pump (30), the vehicle lubrication control method comprising:
receiving, by the controller (2), a signal indicating a request to start a vehicle system; and
operating the electric oil pump (30) for a constant time after the receiving, by the controller (2), the signal indicating the request to start the vehicle system.

7. The vehicle lubrication control method according to claim 6, further comprising operating, by the controller (2), the electric oil pump (30) for the constant time when an operation stop time of the electric oil pump (30) is equal to or longer than a predetermined time.

## Patentansprüche

1. Fahrzeugschmieranordnung für ein Fahrzeug, die Folgendes umfasst:
eine rotierende elektrische Maschine (10); und
eine Antriebskraftübertragungsvorrichtung (21, 22);
wobei die Fahrzeugschmieranordnung Folgendes umfasst:
einen ersten Behälter (101), der zur Aufnahme von Öl konfiguriert ist;
einen Ölkühler (60), der zum Kühlen des Öls konfiguriert ist;
einen zweiten Behälter (102), der zur Aufnahme des Öls konfiguriert ist und ein kleineres Fassungsvermögen als das des ersten Behälters (101) aufweist;
einen ersten Ölpfad (81), der den ersten Behälter (101) mit dem Ölkühler (60) verbindet;
einen zweiten Ölpfad (82, 83, 84, 85, 86, 87, 88), der den Ölkühler (60) mit der Antriebskraftübertragungsvorrichtung (21, 22) und der rotierenden elektrischen Maschine (10) verbindet, wobei der zweite Ölpfad (82, 83, 84, 85, 86, 87, 88) Zweigölpfade für die Zufuhr des Öls zu der Antriebskraftübertragungsvorrichtung (21, 22) bzw. der rotierenden elektrischen Maschine (10) umfasst, wobei Leitungen (82, 83, 84, 85), die in dem zweiten Ölpfad (82, 83, 84, 85, 86, 87, 88) vorgesehen sind und die der Antriebskraftübertragungsvorrichtung (21, 22) Öl vom Ölkühler (60) zuführen, in der Nähe der rotierenden elektrischen Maschine (10) angeordnet sind, so dass das Öl, das in den Leitungen (82, 83, 84, 85) fließt, durch die Wärme erwärmt wird, die von der rotierenden elektrischen Maschine (10) erzeugt wird; und
eine elektrische Ölpumpe (30), die dafür konfiguriert ist, das in dem ersten Behälter (101) enthaltene Öl zu der Antriebskraftübertragungsvorrichtung (21, 22) und der rotierenden elektrischen Maschine (10) zu befördern, wobei die elektrische Ölpumpe (30) im ersten Ölpfad (81) oder im zweiten Ölpfad (82, 83, 84, 85, 86, 87, 88) vorgesehen ist,
wobei der zweite Behälter (102) stromabwärts des Ölkühlers (60) im zweiten Ölpfad (82, 83, 84, 85, 86, 87, 88) vorgesehen ist.

2. Fahrzeugschmieranordnung nach Anspruch 1, wobei der zweite Behälter (102) oberhalb eines statischen Ölstands des Öls vorgesehen ist, das im ersten Behälter (101) enthalten ist.

3. Fahrzeugschmieranordnung nach Anspruch 2, die ferner ein Rückschlagventil (70) umfasst, das dafür konfiguriert ist, einen Rückfluss des Öls aus dem zweiten Behälter (102) in den ersten Behälter (101) zu verhindern.

4. Fahrzeugschmieranordnung nach einem der Ansprüche 1 bis 3, die ferner ein Gehäuse (40) umfasst, das den ersten Behälter (101) aufnimmt, wobei der zweite Behälter (102) außerhalb des Gehäuses (40) angeordnet ist.

5. Fahrzeugschmieranordnung nach einem der Ansprüche 1 bis 4, wobei der zweite Behälter (102) einstückig mit dem Ölkühler (60) gebildet ist.

6. Verfahren zur Steuerung der Fahrzeugschmierung für ein Fahrzeug,
wobei das Fahrzeug Folgendes umfasst: eine rotierende elektrische Maschine (10), eine Antriebskraftübertragungsvorrichtung (21, 22), einen ersten Behälter (101), einen Ölkühler (60), einen zweiten Behälter (102), einen ersten Ölweg (81), einen zweiten Ölweg (82, 83, 84, 85, 86, 87, 88), eine elektrische Ölpumpe (30) und eine Steuerung (2),
wobei der erste Behälter (101) zur Aufnahme von Öl konfiguriert ist,
der Ölkühler (60) dafür konfiguriert ist, das Öl zu kühlen,
der zweite Behälter (102) zur Aufnahme des Öls konfiguriert ist und ein kleineres Fassungsvermögen als das des ersten Behälters (101) aufweist;
der erste Ölpfad (81) den ersten Behälter (101) mit dem Ölkühler (60) verbindet,
der zweite Ölpfad (82, 83, 84, 85, 86, 87, 88) den Ölkühler (60) mit der Antriebskraftübertragungsvorrichtung (21, 22) und der rotierenden elektrischen Maschine (10) verbindet,
der zweite Ölpfad (82, 83, 84, 85, 86, 87, 88) Zweigölpfade für die Zufuhr des Öls zu der Antriebskraftübertragungsvorrichtung (21, 22) bzw. der rotierenden elektrischen Maschine (10) umfasst, wobei Leitungen (82, 83, 84, 85), die in dem zweiten Ölpfad (82, 83, 84, 85, 86, 87, 88) vorgesehen sind und die der Antriebskraftübertragungsvorrichtung (21, 22) Öl vom Ölkühler (60) zuführen, in der Nähe der rotierenden elektrischen Maschine (10) angeordnet sind, so dass das Öl, das in den Leitungen (82, 83, 84, 85) fließt, durch die Wärme erwärmt wird, die von der rotierenden elektrischen Maschine (10) erzeugt wird,
wobei die elektrische Ölpumpe (30) im ersten Ölpfad (81) oder im zweiten Ölpfad (82, 83, 84, 85, 86, 87, 88) vorgesehen ist,
wobei die elektrische Ölpumpe (30) dafür konfiguriert ist, das in dem ersten Behälter (101) enthaltene Öl zu der Antriebskraftübertragungsvorrichtung (21, 22) und der rotierenden elektrischen Maschine (10) zu befördern,
wobei der zweite Behälter (102) stromabwärts des Ölkühlers (60) im zweiten Ölpfad (82, 83, 84, 85, 86, 87, 88) vorgesehen ist.
wobei die Steuerung (2) zum Steuern der elektrischen Ölpumpe (30) konfiguriert ist,
wobei das Verfahren zur Steuerung der Fahrzeugschmierung Folgendes umfasst:
Empfangen, durch die Steuerung (2), eines Signals, das eine Anforderung zum Starten eines Fahrzeugsystems anzeigt; und
Betreiben der elektrischen Ölpumpe (30) für eine konstante Zeit nach dem Empfang, durch die Steuerung (2), des Signals, das die Aufforderung zum Starten des Fahrzeugsystems anzeigt.

7. Verfahren zur Steuerung der Fahrzeugschmierung nach Anspruch 6, das ferner das Betreiben, durch die Steuerung (2), der elektrischen Ölpumpe (30) für die konstante Zeit umfasst, wenn eine Betriebsstoppzeit der elektrischen Ölpumpe (30) gleich oder länger als eine vorbestimmte Zeit ist.

## Revendications

1. Structure de lubrification de véhicule pour véhicule comprenant :
une machine électrique tournante (10) ; et
un appareil de transmission de force motrice (21, 22) ;
la structure de lubrification de véhicule comprenant :
un premier réservoir (101) configuré pour stocker de l'huile ;
un refroidisseur d'huile (60) configuré pour refroidir l'huile ;
un deuxième réservoir (102) configuré pour stocker l'huile et ayant une capacité inférieure à une capacité du premier réservoir (101) ;
un premier trajet d'huile (81) reliant le premier réservoir (101) au refroidisseur d'huile (60) ;
un deuxième trajet d'huile (82, 83, 84, 85, 86, 87, 88) reliant le refroidisseur d'huile (60) à l'appareil de transmission de force motrice (21, 22) et à la machine électrique tournante (10), le deuxième trajet d'huile (82, 83, 84, 85, 86, 87, 88) comprenant des trajets d'huile de dérivation pour fournir l'huile à l'appareil de transmission de force motrice (21, 22) et à la machine électrique tournante (10), respectivement, des tuyaux (82, 83, 84, 85) prévus dans le deuxième trajet d'huile (82, 83, 84, 85, 86, 87, 88) et qui fournissent de l'huile à partir du refroidisseur d'huile (60) à l'appareil de transmission de force motrice (21, 22) étant agencés à proximité de la machine électrique tournante (10), de sorte que l'huile circulant dans les tuyaux (82, 83, 84, 85) est réchauffée par la chaleur générée par la machine électrique tournante (10) ; et
une pompe à huile électrique (30) configurée pour fournir l'huile stockée dans le premier réservoir (101) à l'appareil de transmission de force motrice (21, 22) et à la machine électrique tournante (10), la pompe à huile électrique (30) étant prévue dans le premier trajet d'huile (81) ou le deuxième trajet d'huile (82, 83, 84, 85, 86, 87, 88),
le deuxième réservoir (102) étant prévu en aval du refroidisseur d'huile (60) dans le deuxième trajet d'huile (82, 83, 84, 85, 86, 87, 88).

2. Structure de lubrification de véhicule selon la revendication 1, dans laquelle le deuxième réservoir (102) est prévu au-dessus d'un niveau d'huile statique de l'huile stockée dans le premier réservoir (101).

3. Structure de lubrification de véhicule selon la revendication 2, comprenant en outre un clapet anti-retour (70) configuré pour empêcher le reflux de l'huile à partir du deuxième réservoir (102) au premier réservoir (101).

4. Structure de lubrification de véhicule selon l'une quelconque des revendications 1 à 3, comprenant en outre un boîtier (40) qui loge le premier réservoir (101), dans lequel le deuxième réservoir (102) est agencé à l'extérieur du boîtier (40).

5. Structure de lubrification de véhicule selon l'une quelconque des revendications 1 à 4, dans laquelle le deuxième réservoir (102) est construit d'un seul tenant avec le refroidisseur d'huile (60).

6. Procédé de commande de lubrification de véhicule pour un véhicule,
le véhicule comprenant une machine électrique tournante (10), un appareil de transmission de force motrice (21, 22), un premier réservoir (101), un refroidisseur d'huile (60), un deuxième réservoir (102), un premier trajet d'huile (81), un deuxième trajet d'huile (82, 83, 84, 85, 86, 87, 88), une pompe à huile électrique (30) et un contrôleur (2),
le premier réservoir (101) étant configuré pour stocker de l'huile,
le refroidisseur d'huile (60) étant configuré pour refroidir l'huile,
le deuxième réservoir (102) étant configuré pour stocker l'huile et ayant une capacité inférieure à une capacité du premier réservoir (101),
le premier trajet d'huile (81) reliant le premier réservoir (101) au refroidisseur d'huile (60),
le deuxième trajet d'huile (82, 83, 84, 85, 86, 87, 88) reliant le refroidisseur d'huile (60) à l'appareil de transmission de force motrice (21, 22) et à la machine électrique tournante (10),
le deuxième trajet d'huile (82, 83, 84, 85, 86, 87, 88) comprenant des trajets d'huile de dérivation pour fournir l'huile à l'appareil de transmission de force motrice (21, 22) et à la machine électrique tournante (10), respectivement, des tuyaux (82, 83, 84, 85) prévus dans le deuxième trajet d'huile (82, 83, 84, 85, 86, 87, 88) et qui fournissent de l'huile à partir du refroidisseur d'huile (60) à l'appareil de transmission de force motrice (21, 22) disposés à proximité de la machine électrique tournante (10), de sorte que l'huile circulant dans les tuyaux (82, 83, 84, 85) est réchauffé par la chaleur générée par la machine électrique tournante (10),
la pompe à huile électrique (30) étant prévue dans le premier trajet d'huile (81) ou le deuxième trajet d'huile (82, 83, 84, 85, 86, 87, 88),
la pompe à huile électrique (30) étant configurée pour fournir l'huile stockée dans le premier réservoir (101) à l'appareil de transmission de force motrice (21, 22) et à la machine électrique tournante (10),
le deuxième réservoir (102) étant disposé en aval du refroidisseur d'huile (60) dans le deuxième trajet d'huile (82, 83, 84, 85, 86, 87, 88),
le contrôleur (2) étant configuré pour contrôler la pompe à huile électrique (30),
le procédé de commande de lubrification de véhicule comprenant :
la réception, par le contrôleur (2), d'un signal indiquant une demande de démarrage d'un système de véhicule ; et
le fonctionnement de la pompe à huile électrique (30) pendant un temps constant après la réception, par le contrôleur (2), du signal indiquant la demande de démarrage du système de véhicule.

7. Procédé de commande de lubrification de véhicule selon la revendication 6, comprenant en outre le fonctionnement, par le contrôleur (2), de la pompe à huile électrique (30) pendant le temps constant où un temps d'arrêt de fonctionnement de la pompe à huile électrique (30) est égal à ou plus long qu'un temps prédéterminé.
